Europäisches Patentamt

European Patent Office

Office européen des brevets

(11) Publication number: **0 307 216**
**A2**

# (12) EUROPEAN PATENT APPLICATION

(21) Application number: 88308340.4

(22) Date of filing: 09.09.88

(51) Int. Cl.⁴: **H 02 K 3/487**

(30) Priority: 10.09.87 GB 8721352

(43) Date of publication of application:
**15.03.89 Bulletin 89/11**

(84) Designated Contracting States:
**AT BE CH DE FR GB IT LI NL SE**

(71) Applicant: **NORTHERN ENGINEERING INDUSTRIES PLC**
**NEI House Regent Centre**
**Newcastle upon Tyne NE3 3SB (GB)**

(72) Inventor: **Howland, Alan Victor**
**c/o Nei Peebles Ltd 581 Tyburn Road**
**Erdington Birmingham B24 9RX (GB)**

(74) Representative: **Sanderson, Michael John et al**
**MEWBURN ELLIS & CO 2/3 Cursitor Street**
**London EC4A 1BQ (GB)**

(54) Electrical machines incorporating slot wedges.

(57) An electrical machine (10) includes a component (12) such as a rotor or a stator with slots (14) formed therein in which are located conductors (16), the mouth of each slot (14) having a dovetail (18) formed therealong. The conductors (16) are retained in the slots (14) by slot wedges (20) each of which comprises an intermediate member (22) having lateral cam surfaces (26) thereon and a pair of side members (24) each having first and second lateral cam surfaces (30,32) thereon. The cam surfaces (26,30,32) are so shaped that, on location of the wedge (20) in a dovetail (18) and on movement of the intermediate member (22) relative to the side members (24) longitudinally of the slot (14) to wedge the side members (24) in the dovetail (18) and to wedge the intermediate member (22) between the side members (24), the intermediate member (22) is forced inwardly of the slot (14) relative to the side members (24) to impose a load on the conductors (16) thereby retaining them in the slot (14).

Fig.1    Fig.2

Fig.5

EP 0 307 216 A2

Bundesdruckerei Berlin

**Description**

## ELECTRICAL MACHINES INCORPORATING SLOT WEDGES

This invention relates to electrical machines incorporating slot wedges.

In electrical machines such as motors or generators, the conductors, typically field coils, are located in generally parallel slots formed in the rotor and/or stator of the machine. As is well known in the art, the conductors have to be restrained from moving within the slots under the influences of electromagnetic and/or mechanical forces which arise during use of the machines.

Conventional arrangements for restraining the conductors in the slots usually rely on slot wedges. In one arrangement, each slot has a dovetail at the open end thereof into which a longitudinal dovetail wedge is driven. The wedge develops force on the conductor(s) in the slot owing to the provision of packing material located between the wedge and the conductor(s). The dovetail wedge has a substantially constant cross-section which is trapezium-shaped, the outer and inner surfaces (relative to the slot) being parallel to one another.

In practice, the selection of suitable packing is time-consuming and rarely will the packing be a constant thickness along the full length of the slot. The latter feature means it is unlikely that the conductor(s) will be held securely along the full length thereof in the slot. Thus, the conductor(s) is likely to be subjected to localised vibrations which may result in failure of the conductor(s). Furthermore, the dovetail wedge is difficult to manufacture in that it has to be machined to a tight fit in the dovetailed portion of the slot.

In a second similar arrangement, the latter disadvantage may be alleviated by interposing a second wedge between the dovetail wedge and the packing. The dovetail wedge and the second wedge have complementarily-inclined surfaces in sliding contact with one another whereby movement of the two wedges relative to one another in the longitudinal direction of the slot causes an increase in the thickness of the combined wedges which develops the restraining force on the conductor(s). Although the dovetail wedge no longer has to be a tight fit in the dovetailed portion of the slot, the slot has to be slightly deeper to accommodate the increase in thickness of the combined wedges. Thus, in machines having a given output, the stator or rotor has to be slightly larger than is required.

It would be desirable to provide an electrical machine with slot wedges which reduced or obviated one or more of the aforementioned disadvantages.

According to the present invention, there is provided an electrical machine having a component with slots formed therein in which are located conductors, the opposed sidewalls of each slot, adjacent the mouth there of,being provided with a dovetail therealong, and, for each slot, at least one slot wedge to retain the or each conductor in said slot, characterised in that each slot wedge comprises an intermediate member having lateral cam surfaces thereon, and two side members each having first and second lateral cam surfaces thereon, said first cam surfaces of the side members forming a first pair of surfaces which, in use of the wedge, interact with complementary surfaces forming part of the dovetail to retain said wedge relative to the slot, and said second cam surfaces of the side members forming a second pair of surfaces complementary to and engageable with the lateral cam surfaces of the intermediate member, the shapes of the cam surfaces on the intermediate member and on the side members being such that, in use and on movement of the intermediate member relative to the side members longitudinally of the slot to wedge the intermediate member between the side members, the intermediate member is forced inwardly of the slot relative to the side members to impose a load on the or each conductor thereby to retain them in the slot.

Preferably, the lateral cam surfaces of the intermediate member of a slot wedge converge towards one another in each of two mutually perpendicular directions, which directions, in use of the wedge, may be substantially parallel with the central longitudinal plane of the slot, one extending along the length of the slot and the other extending outwardly from the slot.

Conveniently, the first pair of surfaces of the side members of a slot wedge converge towards one another in a direction outwardly from the slot.

The side members may be connected to one another to assist in assembly of the wedge, the connection between the side members preferably being readily removable, such as by snapping, cutting or other shearing action following assembly of the wedge.

By way of example only, the invention will now be described in greater detail with reference to the accompanying drawings of which:

Figs. 1 and 2 are a plan view from above and a plan view from below respectively of the side members of a slot wedge of an electrical machine according to the invention;

Fig. 3 is an end view in the direction of arrow III in Fig. 2;

Fig. 4 is a plan view from above of the intermediate member of the wedge of Figs. 1 to 3;

Fig. 5 is a partial cross-section through the stator of the electrical machine incorporating the wedge of Figs. 1 to 4, and

Fig. 6 is a partial cross-section on line VI - VI of Fig. 5.

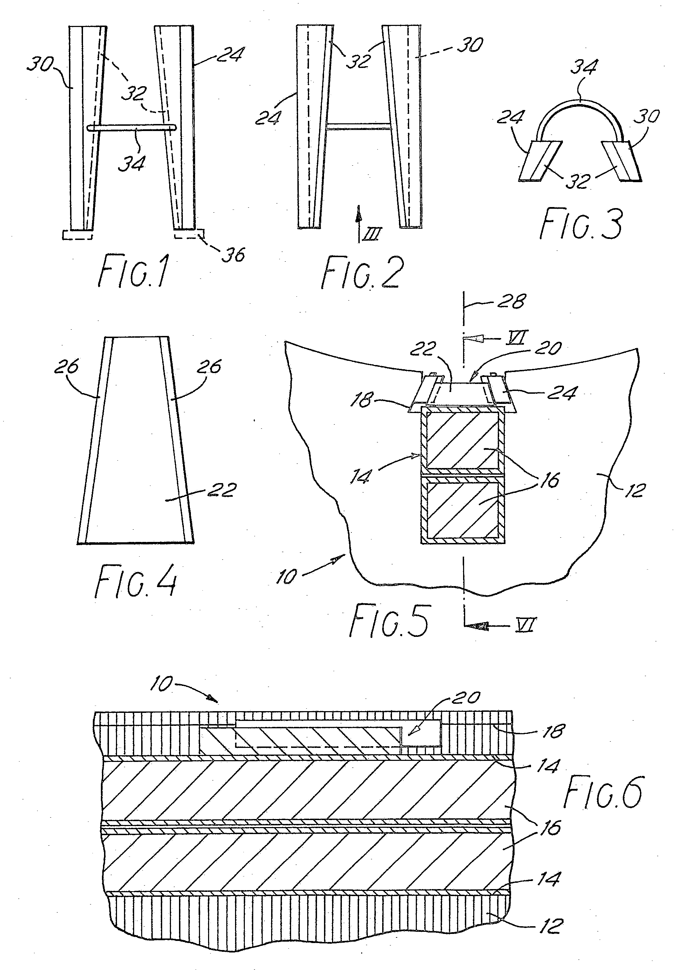

Referring to the drawings, an electrical machine 10 (see Figs. 5 and 6), for example a motor or a generator is here represented by a laminated stator 12. The stator 12 has a plurality of parallel slots 14, which are precut in the individual laminations prior to the stator stack being formed, in which are located conductors 16, such as insulated coils, strips or the like. The conductors 16 are held in the slots 14 by a plurality of slot wedges 20 which engage dovetails 18 formed near the mouths of the slots 14.

The slot wedges 20 each consist of an intermediate member 22 (see Fig. 4) and a pair of side members 24 (see Figs. 1 to 3).

The intermediate member 22 has lateral cam surfaces 26 which converge towards one another in each of two mutually perpendicular directions. When the member 22 is in position in the slot 14, the directions are substantially parallel to the central longitudinal plane 28 of the slot 14, one extending along and one extending outwardly of the slot 14.

The side members 24 each have first and second lateral surfaces 30,32, In the assembled condition of the wedge 20, the first surfaces 30 of the members 24 form a first pair of surfaces which converge towards one another in a direction outwardly from the slot 14. The pair of surfaces 30 engage complementary surfaces forming part of the dovetail 18 to retain the wedge 20 relative to the slot 14.

Also in the assembled condition of the wedge 20, the second surfaces 32 of the members 24 form a second pair of cam surfaces complementary to the cam surfaces 26 of the intermediate member 22.

The angles at which the various surfaces are disposed have been exaggerated in the drawings for clarity.

The side members 24 are connected to one another by a strip 34 for each of handling during assembly of the machine 10. The strip 34 can be readily removed, for example by snapping, cutting or other shearing action, following assembly of the wedge 20 in the slot 14.

In use, following location of the conductors 16 in the slots 14, a plurality of pairs of side members 24 are located in the dovetails 18 by slightly flexing the connecting strip 34 to permit the pairs of side members 24 to be inserted in the dovetail through the mouth of the slot 14. The centre members 22 are then pushed into position between each pair of side members 24 and are driven home. The latter action results in the cam surfaces 26 and 32 interacting with one another to wedge the centre member 22 between the side members 24 both longitudinally of the slot 14 and inwardly thereof to impose load on the conductors 16 to retain them in the slot 14. The strip 34 is then broken off the side members 24.

The intermediate and side members 22 and 24 are injection moulded in a glass-reinforced expoxy resin material having the required strength and temperature resistance properties. Typically, the material has to withstand temperatures up to 180°C. Clearly, other materials, as is well understood in the art, can be used to manufacture the wedge 20.

A slot wedge constructed in accordance to the invention has a number of advantages as compared to the prior art wedges. For example:-

1. it is small (typically approximately 30mm long as compared to lengths of the order of 100mm for prior art wedges) and is easily moulded and is therefore cheap to manufacture.

2. it requires no machining to match the dimensions of the dovetail;

3. it is not necessary to use packing to achieve loading of the conductors; and

4. it is very easily assembled in the slot.

Although the smallness of the wedge means that a relatively high number have to be used in a machine (typically one every 60-90mm), that factor is more than offset by the time saving achieved because of the ease with which the wedges can be assembled. For example, a prototype machine incorporating wedges in accordance with the invention was assembled in approximately one eighth of the time required to assemble the machine using conventional wedges.

Also, owing to the ease with which the wedges are assembled in the slots 14, any damaged or missing wedges can be readily replaced during routine maintenance of the machine without having to remove other wedges from the slot as would be the case with prior art wedges.

It will be appreciate that, if the material from which the side members are made is sufficiently resilient to allow flexure for insertion into the slot, the connection between the side members could be considerably larger and remain a part of the wedge following assembly, i.e. the side members would be integral parts of a single wedge member which together with the intermediate member would comprise the slot wedge of a machine in accordance with the invention.

If the electrical machine has ventilation slots, the side members 24 can each be provided with an integral end abutment surface, as shown in ghost outline at 36 in Fig. 1, which engages the ventilation slot and prevents the side members 24 from sliding along the dovetail 18.

**Claims**

1. An electrical machine having a component with slots formed therein in which are located conductors, the opposed sidewalls of each slot, adjacent the mouth thereof, being provided with a dovetail therealong, and, for each slot, at least one slot wedge to retain the or each conductor in said slot, characterised in that each slot wedge (20) comprises an intermediate member (22) having lateral cam surfaces (26) thereon, and two side members (24) each having first and second lateral cam surfaces (30,32) thereon, said first cam surfaces (30) of the side members (24) forming a first pair of surfaces which, in use of the wedge (20), interact with complementary surfaces forming part of the dovetail (18) to retain said wedge (20) relative to the slot (14), and said second cam surfaces (32) of the side members (24) forming a second pair of surfaces complementary to and engageable with the lateral cam surfaces (26) of the intermediate member (22), the shapes of the cam surfaces (26,30,32) on the intermediate member (22) and on the side members (24) being such that, in the use and on movement of the intermediate member (22) relative to the side members (24) longitudinally of the slot (14) to wedge the intermediate member (22) between the side members (24), the intermediate member (22) is forced inwardly of the slot (14) relative to the side members (24) to impose a load on the or each conductor (16) thereby to retain them in the slot (14).

2. An electrical machine as claimed in claim 1 in which the lateral cam surfaces (26) of the intermediate member (22) of a slot wedge converge towards one another in each of two mutually perpendicular directions.

3. An electrical machine as claimed in claim 2 in which siad directions, in use of the wedge (20), are substantially parallel with the longitudinal central plane of the slot (14), one extending along the length of the slot (14) and the other extending outwardly from the slot (14).

4. An electrical machine as claimed in any one of claims 1 to 3 in which the first pair of surfaces (30) of the side members (24) of a slot wedge (20) converge towards one another in a direction outwardly from the slot (14).

5. An electrical machine as claimed in any one of claims 1 to 4 in which the side members (24) of each slot wedge (20) are connected to one another.

6. An electrical machine as claimed in claim 5 in which the connection (34) between the two side members (24) of a slot wedge (20) is removable.

FIG.1

FIG.2

FIG.3

FIG.4

FIG.5

FIG.6